# EUROPEAN PATENT APPLICATION

(11) **EP 2 629 556 A1**
(43) Date of publication of application: **21.08.2013**
(21) Application number: 12155992.6
(22) Date of filing: 17.02.2012
(51) Int. Cl.: H04W 8/18

(54) **Improved set up and configuration of a mobile communications terminal**

(71) Applicant: Doro AB, 226 43 Lund (SE)
(72) Inventor: Ahmed, Salar, 226 55 Lund (SE)
(74) Representative: Ström & Gulliksson AB

(57) **Abstract**

A mobile communications terminal (400) comprises a memory (240) and a controller (210). The controller (210) is configured to request and receive subscription data and determine at least one service from said subscription data. The controller searches for settings for said at least one service in a data storage, receives settings for said at least one service and configures said mobile communications terminal (400) according to said received settings to enable use of the at least one service.

## Description

### TECHNICAL FIELD

This application relates to a method and an apparatus for improved set up and configuration of a mobile communications terminal, and in particular to a method and an apparatus for setting up and configuring a mobile communications terminal's connectivity settings.

### BACKGROUND

The growing market of telecommunications includes many different telecommunications technologies (such as W-CDMA, Wideband Code Division Multiple Access) and telecommunication standards (such as LTE). This plethora of technologies and standards provide the end users with a multitude of functions and applications. To enable a mobile communications terminal to operate correctly in a telecommunications network it needs to be set up correctly especially since some applications and functions require that specific settings are installed and/or correctly configured in a mobile communications terminal. It can be difficult for an end user to be able to ascertain which functions that require which settings and where to get them from. To make the available choice of settings even larger many of the functions depend on the operators' implementation and are thus operator specific. To simplify the configuration of a mobile communications terminal most operators provide their end users with an automated setup through a web service. A user logs on to the web service, provides the details of his subscription, such as the operator and his telephone number, and also the make and model of the mobile communications terminal. The web service then provides the user with the necessary settings that are fed into the terminal. In some systems the settings are provided in a series of text messages and in some the user has to input the settings manually.

Thus, some systems are reliant on that the mobile communications terminal is able to receive the format that the settings are sent in or the settings will have to be input manually. In one example, the settings are sent via text messages, such as Short Message Service (SMS) messages. This requires that the terminal is provided with the number or address for the SMS Center (SMSC). To overcome this problem of not being able to receive the format of the configuration settings, many operators preload some settings in the mobile communications terminals as they are sold. This solution requires that a specific mobile communications terminal is sold for one particular operator and no other operator. This requires the sellers to maintain large stocks if they want to carry terminals for different operators.

The web services also need to maintain records of all available makes and models of terminals available on the market. This has proven to be difficult as some manufacturers produce models that are specific to an area, but which later finds their way into another area where other operators operate.

These operators will then not have the information on the model readily available to them, and the end user is not able to quickly obtain the settings needed.

Furthermore, one operator may offer different subscriptions which, in turn, each requires different settings. This poses a problem, in particular to less technically adept end users, to properly specify the needed settings to the web service.

There is thus a need for an automated manner of configuring a mobile communications terminal that is quick and simple to use.

### SUMMARY

It is an object of the teachings of this application to overcome the problems listed above by providing a mobile communications terminal comprising a memory and a controller, wherein said controller is configured to request and receive subscription data, determine at least one service from said subscription data, search for settings for said at least one service in a data storage, receive settings for said at least one service, and configure said mobile communications terminal according to said received settings to enable use of the at least one service.

This allows for a quick and simple setup of a mobile communications terminal that does not require any user interaction such as manual setup or manual specification of operator and/or services.

In one embodiment the data storage is local and comprised in the mobile communications terminal. This has many advantages, one being that no settings are required to enable the mobile communications terminal to receive additional settings and the setup can be used upon first power up and configuration of the mobile communications terminal. Furthermore, no potentially sensitive data needs to be broadcasted from the mobile communications terminal.

It is also an object of the teachings of this application to overcome the problems listed above by providing a method for use in a mobile communications terminal, said method comprising requesting and receiving subscription data, determining at least one service from said subscription data, searching for settings for said at least one service in a data storage, receiving settings for said at least one service, and configuring said mobile communications terminal according to said received settings to enable use of the at least one service.

It is also an object of the teachings of this application to overcome the problems listed above by providing a computer readable storage medium encoded with instructions that, when executed on a processor, perform the method according to above.

The author of the present application have realized, after inventive and insightful reasoning, that by automatically checking the subscription details and from this determine whether settings are required or not and then automatically searching for the settings, a very fast and efficient manner of setting up or configuring a mobile communications terminal is achieved that requires no user interaction nor user knowledge.

The teachings herein find use in mobile communications terminals that are to operate in networks offering a multitude of services and especially for users that are technical novices.

Other features and advantages of the disclosed embodiments will appear from the following detailed disclosure, from the attached dependent claims as well as from the drawings.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of the element, device, component, means, step, etc., unless explicitly stated otherwise. The steps of any method disclosed herein do not have to be performed in the exact order disclosed, unless explicitly stated.

### BRIEF DESCRIPTION OF DRAWINGS

The teachings herein will be described in further detail under reference to the accompanying drawings in which:
Figure 1 shows a schematic view of a mobile communications terminal according to one embodiment of the teachings of this application;
Figure 2 shows a schematic view of the general structure of a mobile communications terminal according to one embodiment of the teachings of this application;
Figure 3 shows a schematic view of a telecommunications network according to one embodiment of the teachings of this application;
Figure 4A shows a time dependency graph according to one embodiment of the teachings of this application;
Figure 4B shows a time dependency graph according to one embodiment of the teachings of this application;
Figure 5 shows a flow chart of a method according to one embodiment of the teachings of this application; and
Figure 6 shows a schematic view of a computer-readable medium according to one embodiment of the teachings of this application.

### DETAINED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout.

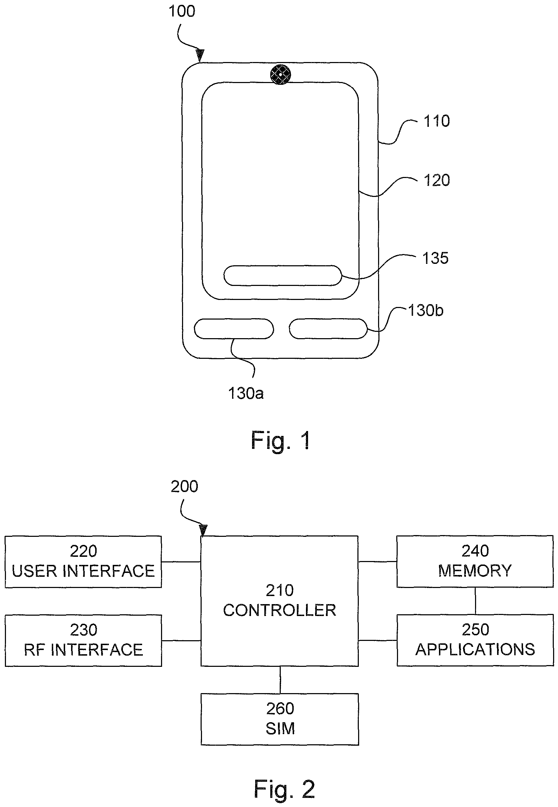

Figure 1 shows a schematic overview of a mobile communications terminal 100 adapted according to the teachings herein. In the embodiment shown the mobile communications terminal is a mobile phone 100. In other embodiments the mobile communications terminal 100 is a personal digital assistant, a media player, a location finding device or any hand-held device capable of communicating with other devices. The mobile phone 100 comprises a housing 110 in which a display 120 is arranged. In one embodiment the display 120 is a touch display. In other embodiments the display 120 is a non-touch display. Furthermore, the mobile phone 100 comprises two keys 130a, 130b. In this embodiment there are two keys 130, but any number of keys, including none, is possible and depends on the design of the mobile phone 100. In one embodiment the mobile phone 100 is configured to display and operate a virtual key 135 on the touch display 120. It should be noted that the number of virtual keys 135 are dependent on the design of the mobile phone 100 and an application that is executed on the mobile phone 100. In one embodiment the communications terminal 100 comprises an ITU-T keypad or a QWERTY (or equivalent) keypad in addition to or as an alternative to a touch-sensitive display. In an embodiment where the keypad is an alternative to a touch-sensitive display, the display 120 is a non-touch-sensitive display.

Figure 2 shows a schematic view of the general structure of a communications terminal according to figure 1. The mobile phone 100 comprises a controller 210 which is responsible for the overall operation of the mobile terminal and is preferably implemented by any commercially available CPU ("Central Processing Unit"), DSP ("Digital Signal Processor") or any other electronic programmable logic device. The controller 210 may be implemented using instructions that enable hardware functionality, for example, by using executable computer program instructions in a general-purpose or special-purpose processor that may be stored on a computer readable storage medium (disk, memory etc) 240 to be executed by such a processor. The controller 210 is configured to read instructions from the memory 240 and execute these instructions to control the operation of the mobile communications terminal 100. The memory 240 may be implemented using any commonly known technology for computer-readable memories such as ROM, RAM, SRAM, DRAM, CMOS, FLASH, DDR, EEPROM memory, flash memory, hard drive, optical storage or any combination thereof. The memory 240 is used for various purposes by the controller 210, one of them being for storing application data and various software modules in the mobile terminal. The software modules include a real-time operating system, drivers for a man-machine interface 220, an application handler as well as various applications 250. The applications 250 are sets of instructions that when executed by the controller 210 control the operation of the mobile communications terminal 100. The applications 250 can include a messaging application for short messaging service (SMS), multimedia messaging service (MMS) and electronic mail, a media player application, as well as various other applications 250, such as applications for voice calling, video calling, web browsing, document reading and/or document editing, an instant messaging application, a phonebook application, a calendar application, a control panel application, one or more video games, a notepad application, location finding applications, et.c.. In one embodiment the memory 240 holds a database containing subscription settings for the mobile communications terminal according to different operators. Since the number of operators available is usually not large the database can be kept relatively small and does not require much storage space. Furthermore, the mobile communications terminal 200 comprises a Subscriber Identity Module (SIM) reader 260 that is capable of reading data from and writing data to a SIM card.

The mobile communications terminal 200 further comprises a user interface 220, which in the mobile communications terminal 100 of figure 1 is comprised of the display 120, the keys 130, 135, a microphone and a loudspeaker. The user interface (UI) 220 also includes one or more hardware controllers, which together with the UI drivers cooperate with the display 120, keypad 130, as well as various other I/O devices such as microphone, loudspeaker, vibrator, ringtone generator, LED indicator, etc. As is commonly known, the user may operate the mobile terminal through the man-machine interface thus formed.

The mobile communications terminal 200 further comprises a radio frequency interface 230, which is adapted to allow the mobile communications terminal to communicate with other communications terminals in a radio frequency band through the use of different radio frequency technologies. Examples of such technologies are W-CDMA, GSM, UTRAN, LTE and NMT to name a few. The controller 210 is configured to operably execute the applications 250, such as the voice call and message handling applications, through the RF interface 230 and software stored in the memory 240 which software includes various modules, protocol stacks, drivers, etc. to provide communication services (such as transport, network and connectivity) for the RF interface 230, and optionally a Bluetooth interface and/or an IrDA interface for local connectivity. The RF interface 230 comprises an internal or external antenna as well as appropriate radio circuitry for establishing and maintaining a wireless link to a base station. As is well known to a person skilled in the art, the radio circuitry comprises a series of analogue and digital electronic components, together forming a radio receiver and transmitter. These components include, i.e., band pass filters, amplifiers, mixers, local oscillators, low pass filters, AD/DA converters, etc.

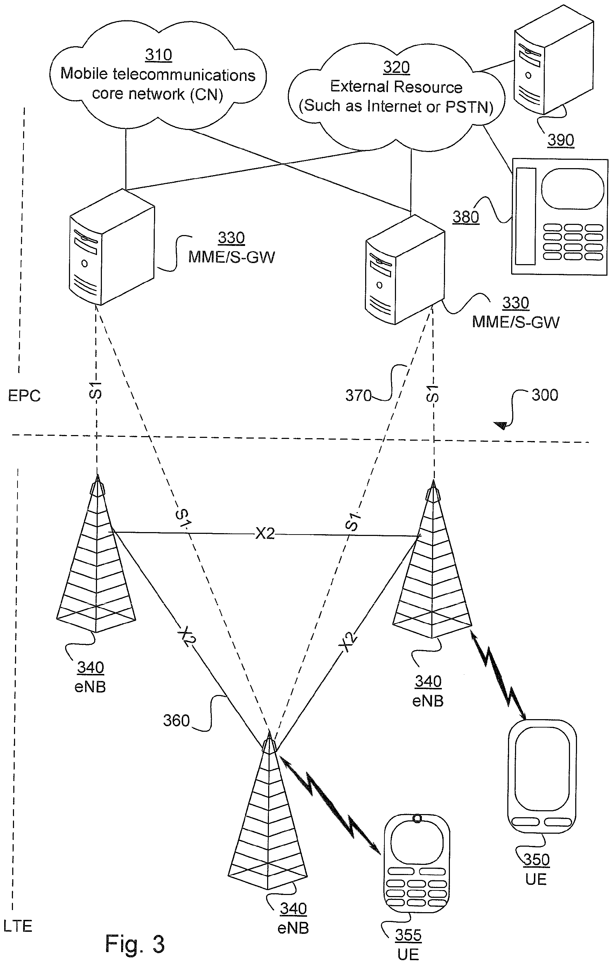

Figure 3 shows a schematic view of the general structure of a telecommunications system 300 according to the teachings herein. In the telecommunication system of figure 3, various telecommunications services such as cellular voice calls, www/wap browsing, cellular video calls, data calls, facsimile transmissions, music transmissions, still image transmissions, video transmissions, electronic message transmissions and electronic commerce may be performed between a mobile terminal 100, 300 according to the disclosed embodiments and other communications terminals, such as another mobile terminal 355 or a stationary telephone 380. The mobile terminals 350, 355 are connected to a mobile telecommunications network 310 through Radio Frequency links via base stations 340.

The telecommunications system 300 comprises at least one server 330. A server 330 has a data storage and a controller that may be implemented by any commercially available CPU ("Central Processing Unit"), DSP ("Digital Signal Processor") or any other electronic programmable logic device. In one embodiment such a server is a Mobility Management Entity (MME). In one embodiment such a server is a Gateway (GW). The servers 330 are configured to communicate with a mobile telecommunications core network (CN) 310 and/or an external resource 320 such as the internet or a Public Switched Telephone Network (PSTN). A PSTN 320 is configured to communicate with and establish communication between stationary or portable telephones 380. In one embodiment the external resource comprises or is configured to communicate with an external service provider 390. In one embodiment the servers 330 are configured to communicate with other communications terminals using a packet switched technology or protocol. In such an embodiment the servers 330 may make up an Evolved Packet Core (EPC) layer.

The servers 330 are configured to communicate with nodes, also referred to as base stations 340. In one embodiment the base station 340 is an evolved Node Base (eNB). A base station 340 is further configured to communicate with a server 330. In one embodiment the communication between a server 330 and a base station 340 is effected through a standard or protocol 370. In one embodiment the protocol is S1. A base station 340 is configured to communicate with another base station 340. In one embodiment the communication between a base station 340 and another base station 340 is effected through a standard or protocol 360. In one embodiment the protocol 360 is X2. A base station 340 is further configured to handle or service a cell 380. In one embodiment the at least one base stations 340 make up a Long Term Evolution (LTE) layer. In one embodiment the at least one base stations 340 make up an LTE Advanced layer.

In one embodiment the base station 340 is configured to communicate with a mobile communications terminal 350 (100) through a wireless radio frequency protocol.

In one embodiment the telecommunications system 300 is an Evolved Packet System (EPS) network. In one embodiment the telecommunications system is a system based on the 3GPP (3^{rd} Generation Partnership Project) standard. In one embodiment the telecommunications system is a system based on the UMTS (Universal Mobile Telecommunications System) standard. In one embodiment the telecommunications system is a system based on a telecommunications standard such as GSM, D-AMPS, CDMA2000, FOMA or TD-SCDMA.

One popular function that is provided in many telecommunications standards and by operators is the Multimedia Message Service (MMS). MMS messaging allows a user to send images, audio and movies to other users and is a popular and highly used function. However, the delivery and sending of MMS messages is much more complex than for example the sending and delivery of SMS messages. The first step is for the sending device to encode the multimedia content in a fashion similar to sending a MIME (Multipurpose Internet Mail Extension) e-mail (MIME content formats are defined in the MMS Message Encapsulation specification). The message is then forwarded to the operator's MMS store and forward server, known as the MMSC Multimedia Messaging Service center. If the receiver is on another carrier, the relay forwards the message to the recipient's carrier using the Internet.

When the MMSC has received a message the content is extracted and sent to a temporary storage server with an HTTP (HyperText Transfer protocol) front-end. An SMS control message containing the address (such as the URL (Uniform Resource Location)) of the content is then sent to the recipient's terminal to trigger the receiver to open and receive the content from the embedded URL through the use of WAP (Wireless Application protocol). This requires that the mobile communications terminal is configured correctly to properly send and receive the media data.

To enable practical usability of the MMS most operators have implemented the service using telecommunications technologies and standards that provide high speed internet access such as the GPRS (General Packet Radio Service). Thus, to be able to use the MMS feature, the mobile communications terminal must also be set up to use WAP and configured for communication using GPRS or similar.

The MMS standard was developed in the early 2000s and the first mobile communication terminals that were MMS capable were released in 2002, for example the Sony Ericsson T68i. It has thus been a long-standing problem to provide a manner of efficiently configure a mobile communication terminal for MMS handling in a simple manner that does not require contacting an operator.

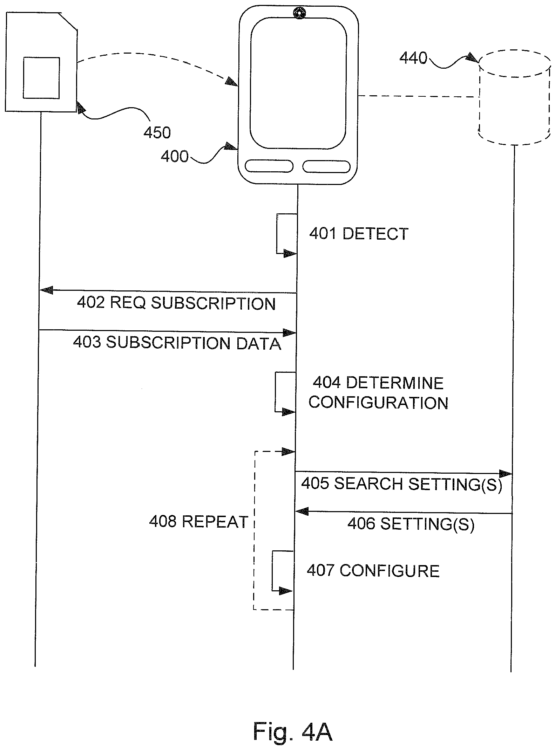

Figure 4A illustrates the time dependency of a mobile communications terminal 400 according to the teachings herein.

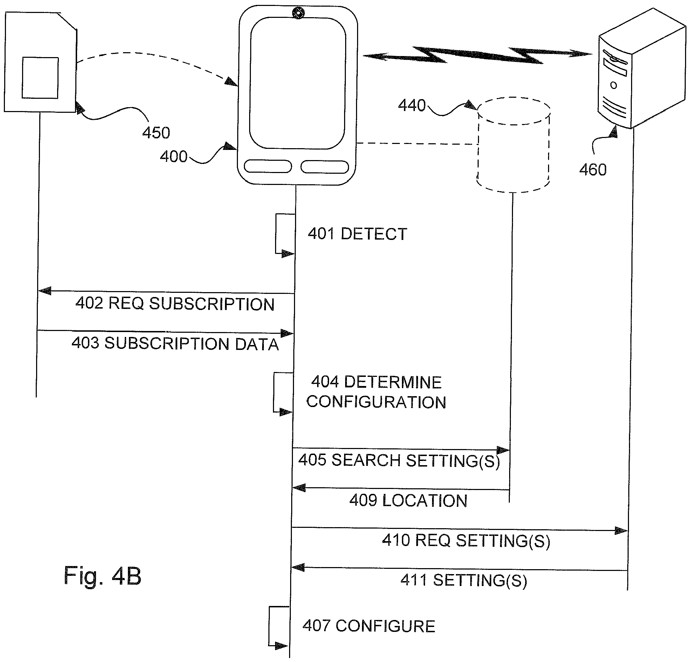

A controller 210 (not shown in figure 4, reference is made to figure 2) of a mobile communications terminal 400 detects 401 that a new SIM card 450 is present. In one embodiment the controller 210 is configured to detect that a new SIM card 450 is inserted. In one embodiment the controller 210 is configured to detect that an already present SIM card 450 is updated with new services or that a subscription associated with the SIM card 450 is updated with new services.

The controller 210 queries 402 the SIM card 450 for subscription data and the SIM card returns the requested subscription data 403 which is received by the controller 210. Such data may include a listing of available services such as MMS, SMS, email, internet, GPRS, chat or IM (Instant Messaging) to name a few services. In one embodiment the subscription data includes all available services and in one embodiment the subscription data includes only the recently added services.

The controller 210 proceeds with determining 404 if the current configuration enables the use of the services that are available trough the subscription. If it is determined that the current configuration does not enable use of one or more of the services, the controller 210 searches for the necessary settings 405 in a data storage 440.

The data storage 440 is, in one embodiment, internal to the mobile communications terminal 400. This is indicated by the dashed lines in figure 4A. The internal data storage 440 may be stored in the memory (240) of the mobile communications terminal 400. The data storage 440 is arranged to store the necessary settings for the services offered by an operator. In one embodiment a list of operators and their corresponding services and associated settings is stored according to: Operator -> Service -> Settings. In one embodiment a list of services and the corresponding operator and associated settings is stored according to: Service -> Operator-> Settings. In such embodiments the subscription data may include the operator for the subscription.

The data storage 440 is arranged to return 406 the necessary settings, which are received by the controller 210. The controller 210 then configures 407 the mobile communications terminal 400 accordingly. Examples of settings that are provided for an MMS service are: Provider APN (Access Point name), Internet Gateway (for example an IP (Internet Protocol) address), MMSC (for example an IP address) and Account information, such as a user name and possibly a password.

In an embodiment where the settings are stored internally, the mobile communications terminal 400 is not required to be set up according to any operator-specific settings to be able to receive the necessary settings. This simplifies the setup of a device as no prior knowledge or manual steps are needed making the setup routine as disclosed herein highly usable for persons being technical novices.

It is further not dependent on network coverage and allows a user to setup his mobile communications terminal while being, for example, in a plane. This allows a user to change his configuration while travelling to another area or country and have his mobile communications terminal properly configured as he arrives at the area or country.

Furthermore, no sensitive data is broadcasted from the mobile communications terminal and there is thus no risk of misuse or other unauthorised use of sensitive data such as an IMSI (International Mobile Subscription Identifier) or an IMSI (International Mobile Equipment Identifier).

In one embodiment the controller 210 is configured to search the database 440 for settings specific to GPRS. In one embodiment the controller 210 is configured to search the database 440 for settings specific to UMTS (Universal Mobile Telecommunications Standard). In one embodiment the controller 210 is configured to search the database 440 for settings specific to EDGE (Enhanced Data Rates for GSM Evolution). In one embodiment the controller 210 is configured to search the database 440 for settings specific to CDMA2000.

In one embodiment the controller 210 is configured to detect that the subscription data indicates internet services and in response thereto search the database 440 for settings specific to such internet services. One example of such an internet service is use of a WAP browser or a web browser. Examples of settings that are received are internet gateway, DNS (Domain Name Server) servers, and possibly dial up settings.

In one embodiment the mobile communications terminal may be configured to operate as a router, possibly a WiFi router according to the IEEE 802.11 standard, and the controller 210 is configured to detect that the subscription data indicates internet services and in response thereto search the database 440 for settings specific to such routing services. Examples of settings that are received are the URL for the internet server and account information such as a user name and possibly a password.

In one embodiment the controller 210 is configured to detect that the subscription data indicates email services and in response thereto search the database 440 for settings specific to such email services. Examples of settings that are received are the outgoing email server name and/or address and the incoming email server name and/or address.

In one embodiment the subscription data includes a type of subscription and the controller 210 is configured to look up the associated available services for the subscription type. The controller 210 is configured to perform such a look up in an internal data storage (not shown) or through an external data storage (not shown). It should be noted that such data storages may be included in the internal data storage 440 or the remote data storage 460) respectively. For example, an operator may offer three different subscriptions: BASIC, MEDIA, DELUXE. The BASIC package includes basic telephone services such as voice call, voice message inbox and SMS. The necessary settings for the BASIC package is thus the operator telephone number for the voice message inbox and the operator telephone number or address for the SMSC (SMS Centre). The MEDIA package includes the BASIC package as well as media related services such as MMS, internet streaming (possibly over GPRS). The necessary settings for the MEDIA package is thus Provider APN (Access Point name), Internet Gateway, MMSC, Account information, such as a user name and possibly a password, DNS (Domain Name Server) servers, and possibly dial up settings in addition to the settings for the BASIC package. The DELUXE package further includes email and general internet services and additionally requires settings for the email account which includes outgoing email server name and the incoming email server name. In such an embodiment the data storage is arranged to store the subscription type and associated operator and settings according to: Package->Settings. The controller 210 searches the data storage 440 for the settings for a specific subscription type and the data storage 440 returns the necessary settings which are received by the controller 210.

The teachings herein thus provide a flexible manner of storing and searching for settings that has the benefit that the total storage consumes less memory space compared to having to store settings for all available makes and models (a number that far exceeds the number of operators and the available services). It is further easier to maintain a list of operators and available services as these do not change as frequently as manufacturers of mobile communications terminals update their model range.

As is indicated by the dashed arrow 408 in figure 4A the controller 210 is configured to repeat the search for settings should further services have been indicated by the subscription data.

In one embodiment the SIM card 450 is arranged to store a Mobile Country Code (MCC) and a Mobile Network Code (MNC). The Mobile Country Code indicates the country of the subscription for the SIM card 450. The MNC indicates the operator of the subscription for the SIM card 450. Knowing the MNC and the MCC it is thus possible to identify the operator and which country the mobile communications terminal 400 is to be used in and thereby which settings that should be employed. The data storage 440 is arranged to store a list of MCCs and MNCs and the corresponding settings. As a SIM card is received or detected to have been updated 401 the controller 210 sends a request 402 for the MMC and MNC to the SIM card 450. The controller receives 403 the MNC and MCC as subscription data from the SIM card 450. The controller optionally detects 404 whether a configuration is valid or not. Should the configuration not be valid, or if the determination of configuration is not performed, the controller 210 searches 405 the list of MNCs, MCCs and corresponding settings in the data storage 440. If the settings are found in the list the controller 210 receives them 406 and configures 407 the mobile communications terminal 400 accordingly.

In one embodiment the list of MNCs, MCCs and corresponding settings are included in the software for the operating system or an application 250 of the mobile communications terminal 400 and, in such an embodiment, the data storage 440 is comprised of the memory 240 of the mobile communication terminal 400.

Since all data is stored and all processing is performed internally in the mobile communication terminal 400 (taken to include the SIM card 450 once it is inserted) the process of configuring the mobile communication terminal 400 can be performed in a fast manner and without requiring that any connection is established, which, in turn, not require that the user (manually) configures the mobile communication terminal 400 in any way which relates to communication (such as configuring the mobile communication terminal 400 for SMS communication) before the process of configuring the mobile communications terminal 400 is started.

In one embodiment the settings received are independent from the actual subscription and depend solely on the operator and the country. This allows for a smaller list to be stored and will also enable the mobile communication terminal 400 to operate correctly even if the user changes his subscription without changing the SIM card 450 (or if the SIM card 450 is not updated as a subscription is changed).

In one embodiment the settings received are independent from the actual subscription and depends solely on the operator. This allows for a smaller list to be stored and will also enable the mobile communication terminal 400 to operate correctly even if the user moves to a different country. This simplifies the roaming procedure.

Figure 4B shows a time dependency according to one embodiment. Should the data storage 440 not include settings for a service it will return 409 a location of a remote data storage 460. The remote data storage is arranged to store data for at least one specific manufacturer and may be hosted by the manufacturer of the mobile communications terminal 400. As for the data storage 440 the remote data storage 460 includes lists of operators and their corresponding settings for the offered services. The controller 210 is configured to establish a connection with the remote data storage, possibly through a radio frequency interface 220 (not shown in figure 4, reference is made to figure 2) and request settings 410 for the services. The controller then receives 411 the settings from the remote storage 460 and configures 407 the mobile communications terminal 400. This provides a manner of storing the settings specific for a manufacturer that is beneficial as it is easier for a manufacturer to update settings for various operators than for the operators to keep a correct overview of all available models. It is further possible to obtain the necessary settings without broadcasting sensitive information such as the IMSI or IMSI as the remote storage may be hosted by the manufacturer and only requires the model of the mobile communications terminal and the requested service to be able to return the necessary settings.

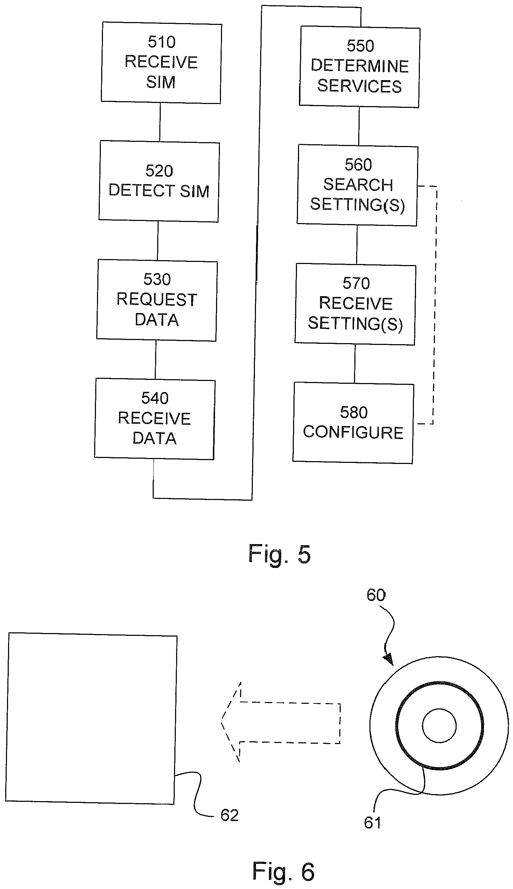

Figure 5 shows a flowchart for a method according to an embodiment. A SIM card is inserted into and received 510 by a mobile communications terminal. A controller detects 520 that a SIM card has been received and checks the SIM card for what capabilities and services are offered by requesting 530 subscription data. The subscription data is received 540 by the controller, and the controller determines 550 what services are available through the subscription and whether settings are required or not. The controller can make such a determination based on whether settings for a service are set up in the mobile communications terminal or not. In one embodiment the controller simply assumes that settings are needed for each available service. The controller searches 560 a data storage for the settings, and as the settings are received 570, the controller configures 580 the mobile communications terminal accordingly. Having a local data storage is highly beneficial since no external connection needs to be established which brings about many advantages, one being that the search for the settings and receiving of the settings can be done very quickly. There is thus only a negligible time delay for requesting settings for each service. To configure all services upon setup gives the added advantage that the mobile communications terminal is assured to have the latest settings.

A list of operators and their corresponding settings is by its very nature relatively small and not likely to change as has been discussed above. However, to keep the data storage up to date the controller is further configured, in one embodiment, to routinely request and receive an update of such a list. The update can be requested explicitly by the controller or it can be pushed to the mobile communications terminal. In one embodiment the updates are pushed to the mobile communications terminal upon start-up. This is beneficial when the mobile communications terminal is brought to a new area where the list may be inadequate. The networks that are found upon start-up may then be queried for operator settings or they may push such data to the mobile communications terminal along with other connection data.

This allows for a mobile communications terminal to be provided with an updated list of settings for various operators. As the list is small the storing of the list does not consume much memory and can easily be installed in portable devices such as mobile communications terminals.

One benefit of the teachings herein is that a mobile communications terminal is able to quickly, and without user interaction, setup or configure itself. As only the operator and the wanted service need to be specified to receive the necessary settings, there is no need for special databases handling individual units or models, such as storing for example special IMSI-IMSI pairs. Such databases are difficult to maintain and overview simply due to their enormous size and the likelihood that such a pair changes when a user changes his equipment. On the other hand, the settings used by an operator have a tendency to be relatively permanent or at least stable only changing when a major standard change is implemented in a network. Such databases storing only operators and their settings are thus much easier to maintain and overview. Special advantage is achieved if a local data storage is queried as the mobile communications terminal setup does not require any previous settings to have been installed. Furthermore, by specifying unwanted subscriptions it is possible to prevent misuse of the mobile communications terminal. For example, should a pirated or not trusted SIM card be inserted the mobile communications terminal will not configure properly rendering it useless to whoever tries to misuse the mobile communications terminal. The configuration arrangement using a remote data storage is also highly versatile and adaptable to changing operators and their services as they offer large storage capacity ad are easy to access to maintain correctly updated.

References to 'computer-readable storage medium', 'computer program product', 'tangibly embodied computer program' etc. or a 'controller', 'computer', 'processor' etc. should be understood to encompass not only computers having different architectures such as single/multi-processor architectures and sequential (Von Neumann)/parallel architectures but also specialized circuits such as field-programmable gate arrays (FPGA), application specific circuits (ASIC), signal processing devices and other devices. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

Figure 6 shows a schematic view of a computer-readable medium as described in the above. The computer-readable medium 60 is in this embodiment a CD (Compact Disc) or a DVD (Digital Video Disc). The CD 60 comprises instructions 61 that when loaded into a controller such as a processor executes a method or procedure according to the embodiments disclosed above. The CD 60 is arranged to be read by a reading device 62 for loading the instructions into the controller. It should be noted that a computer-readable medium can also be other mediums such as memory sticks, flash drives, hard drives or other memory technologies commonly used.

The teachings herein have mainly been described above with reference to a few embodiments. However, as is readily appreciated by a person skilled in the art, other embodiments than the ones disclosed above are equally possible within the scope of the invention, as defined by the appended patent claims.

## Claims

1. A mobile communications terminal (400) comprising a memory (240) and a controller (210), wherein said controller (210) is configured to:
request and receive subscription data;
determine at least one service from said subscription data;
search for settings for said at least one service in a data storage;
receive settings for said at least one service; and
configure said mobile communications terminal (400) according to said received settings to enable use of the at least one service.

2. The mobile communications terminal (400) of claim 1 further comprising said data storage (440).

3. The mobile communications terminal (400) according to claim 1 or 2 wherein said controller (210) is further configured to receive location of a remote data storage in response to said search for settings and request said settings from said remote data storage.

4. The mobile communications terminal (400) according to any of claims 1 to 3, wherein said controller (210) is further configured to determine whether a current configuration does not support said at least one service and if so, search for said settings for said at least one service in said data storage.

5. The mobile communications terminal (400) according to any of claims 1 to 4, wherein said controller (210) is further configured to request and receive said subscription data from a SIM card reader (260).

6. The mobile communications terminal (400) according to any of claims 1 to 5, wherein said at least one service relates to a Multimedia Message Service (MMS) and wherein the settings received include at least one taken from a group comprising Provider Access Point name, Internet Gateway, Multimedia Message Service Center and Account information.

7. The mobile communications terminal (400) according to any of claims 1 to 6, wherein said at least one service relates to at least one taken from the group comprising:
General Packet Switched Radio (GRPS), UMTS, EDGE, CDMA2000, internet services, email services and IEEE802.11 standard communication.

8. The mobile communications terminal (400) according to any of claims 1 to 7, wherein said controller (210) is further configured to receive an update and store said update in said data storage (440) to maintain said data storage (440) current.

9. The mobile communications terminal (400) according to claim 2, or any of claims 3 to 8 when dependent on claim 2, wherein said data storage (440) is arranged to store settings for at least one service, wherein said settings are specific to one operator.

10. The mobile communications terminal (400) according to claim 2, or any of claims 3 to 9 when dependent on claim 2, wherein said data storage (440) is arranged to store a list of unwanted subscriptions and wherein said controller is configured to determine that the subscription data received matches the unwanted subscriptions and in response thereto configure the mobile communications terminal (400) to be unable to use said at least one service to prevent misuse of said mobile communications terminal (400).

11. The mobile communications terminal (400) according to claim 1, wherein said data storage (440) is arranged to store a list of Mobile Country Codes and/or Mobile Network Codes and their corresponding settings and wherein said controller (210) is further configured to receive a Mobile Country Code and/or a Mobile Network Code and to search said data storage (440) for said settings.

12. A method for use in a mobile communications terminal (400), said method comprising:
requesting and receiving subscription data;
determining at least one service from said subscription data;
searching for settings for said at least one service in a data storage;
receiving settings for said at least one service; and
configuring said mobile communications terminal (400) according to said received settings to enable use of the at least one service.

13. A computer readable storage medium (60) encoded with instructions (61) that, when executed on a processor, perform the method according to claim 12.

## Amended claims

### Amended claims in accordance with Rule 137(2) EPC.

**1.** A mobile communications terminal (400) comprising a memory (240) and a controller (210), wherein said controller (210) is configured to:
request and receive subscription data from a SIM card reader (260);
determine at least one service from said subscription data wherein said at least one service relates to a Multimedia Message Service (MMS);
search for settings for said at least one service in a data storage (440),
wherein said data storage (440) is arranged to store a list of Mobile Country Codes and/or Mobile Network Codes and their corresponding settings and
wherein said controller (210) is further configured to receive a Mobile Country Code and/or a Mobile Network Code from said SIM card reader (260) and to search said data storage (440) for said settings based on said Mobile Country Code and/or said MobileNetwork Code;
receive settings for said at least one Multimedia Message Service wherein thesettings received include at least one taken from a group comprising Provider Access Point name, Internet Gateway, Multimedia Message Service Center and Account information; and
configure said mobile communications terminal (400) according to said received settings to enable use of the at least one service.

**2.** The mobile communications terminal (400) of claim 1, wherein the data storage (440) comprises a remote data stowage (460) and wherein the controller (210) is configured to
receive a location of a remote data stowage (460) in response to said search for settings and request said settings from said remote data storage (460) and wherein the
the remote data storage (460) is arranged to store a subscription type andassociated operator and settings and said search through said remote data stowage (460) for said settings is also based on the subscription type. [support page 12 and page 11 "It should be noted that such data storages may be included in the internal data storage 440 or the remote data storage 460"]

**3.** The mobile communications terminal (400) according to any of claims 1 to 2, wherein said controller (210) is further configured to determine whether a current configuration does not support said at least one service and if so, search for said settings for said at least one service in said data storage.

**4.** The mobile communications terminal (400) according to any of claims 1 to 3, wherein said at least one service relates to at least one taken from the group comprising: General Packet Switched Radio (GRPS), UMTS, EDGE, CDMA2000, internet services, email services and IEEE802.11 standard communication.

**5.** The mobile communications terminal (400) according to any of claims 1 to 4, wherein said controller (210) is further configured to receive an update and store said update in said data storage (440) to maintain said data storage (440) current.

**6.** The mobile communications terminal (400) according to any preceding claim, wherein said data storage (440) is arranged to store a list of unwanted subscriptions and wherein said controller is configured to determine that the subscription data received matches the unwanted subscriptions and in response thereto configure the mobile communications terminal (400) to be unable to use said at least one service to prevent misuse of said mobile communications terminal (400).

**7.** A method for use in a mobile communications terminal (400), said method comprising:
requesting and receiving subscription data from a SIM card reader (260);
determining at least one service from said subscription data wherein said at least one service relates to a Multimedia Message Service (MMS);
searching for settings for said at least one service in a data storage (440);
wherein said data storage (440) is arranged to store a list of Mobile Country Codes and/or Mobile Network Codes and their corresponding settings and said method further comprises receiving a Mobile Country Code and/or a Mobile Network Code from said SIM card reader (260) and searching said data storage (440) for said settings based on said Mobile Country Code and/or said Mobile Network Code;
receiving settings for said at least one Multimedia Message Service wherein the settings received include at least one taken from a group comprising Provider Access Point name, Internet Gateway, Multimedia Message Service Center and Account information; and
configuring said mobile communications terminal (400) according to said received settings to enable use of the at least one service.

**8.** A computer readable storage medium (60) encoded with instructions (61) that, when executed on a processor, perform the method according to claim 7.
